# EUROPEAN PATENT SPECIFICATION

(11) **EP 1 801 377 B1**
(45) Date of publication and mention of the grant of the patent: **01.09.2010**
(21) Application number: 06126480.0
(22) Date of filing: 19.12.2006
(51) Int. Cl.: F01N 3/20, F01N 11/00

(54) **Method and system of exhaust gas treatment of an internal combustion engine, system and vehicle equipped with said system**
Verfahren und System zur Abgasbehandlung eines Verbrennungsmotors, System und damit ausgerüstetes Fahrzeug
Procédé et système de traitement de gaz d'échappement d'un moteur à combustion interne, système et véhicule équipé de ce système

(30) Priority: 23.12.2005 IT MI20052471
(43) Date of publication of application: 27.06.2007
(73) Proprietor: Iveco Motorenforschung AG, 9320 Arbon (CH)
(72) Inventor: Ellensohn, Rudolf, 9434 Au (SG) (CH); Stark, Arthur, 9320 Arbon (CH)
(74) Representative: Borsano, Corrado

(56) References cited:
- EP-A- 1 217 196
- EP-A- 1 431 533
- US-A- 3 957 444
- US-A- 5 410 875
- PATENT ABSTRACTS OF JAPAN vol. 011, no. 228 (M-610), 24 July 1987 (1987-07-24) & JP 62 041943 A (TOYOTA MOTOR CORP), 23 February 1987 (1987-02-23)

## Description

### FIELD OF THE INVENTION

The present invention refers to a method and system for the treatment of the exhaust gases of an internal combustion engine, in particular of a diesel engine.

### PRIOR ART

One of the most felt problems in the field of internal combustion engines, in particular with regard to diesel engines, is the formation of nitric oxides during combustion. The nitric oxides are discharged with the exhaust gases of the engine and represent one of the main pollutants. Although various solutions have been proposed to reduce the formation of these compounds, their level in the exhaust gases still represents a problem and, also considering application of ever stricter legal regulations, systems for reduction of nitric oxides in exhaust gases must be used. One of these solutions is known as the SCR (Selective Catalytic Reduction) system; this is based on the reaction, promoted by a suitable catalytic system, between the nitric oxides present in the exhaust gases and ammonia specifically introduced as reducing agent. The ammonia is usually introduced in the form of a reagent able to release ammonia such as, for example, an aqueous solution of urea.

The most frequently used SCR systems are characterized by the problem of very limited activity at low temperatures, generally below 220°C. Conditions of low temperature of the gases leaving the engine are frequent in both the case of passenger and industrial vehicles, and refer, for example, to traveling in city traffic, partial loads, traveling with frequent stops, the phases of heating after a long stop. If such conditions persist for a long time, the exhaust gases may cool the converter and the catalyst it contains. Apart from low activity of the catalyst in these conditions, generally associated with lower production of nitric oxides by the engine, due to the thermal mass of the catalytic system, which also comprises the structures of the converter such as the support of the catalyst, this limited activity may also continue in a subsequent phase despite an increase in temperature of the gases due, for example, to a sudden increase in the load the engine is required to provide, a condition generally associated with increased production of nitric oxides, which would require an adequate conversion efficiency of the catalyst to avoid that the emissions exceed permissible limits.

Also, in the case wherein the reducing agent is injected in the-form of urea or other compounds able to release ammonia by decomposition, their decomposition may be insufficient at low temperatures.

This problem, particularly evident in the case of SCR systems, may also occur in other exhaust gases treatment systems, in particular those of a catalytic nature, obviously considering the different temperature and conversion requirements of the system and of the pollutant to be abated.

EP 1 431 533 describes a treatment system for exhaust gases wherein a by pass flow of an SCR converter is regulated on the basis of a temperature sensed upstream the mixing point of the reducing agent with the gases.

US 3 957 444 describes a system for avoiding overheating of a catalytic converter, by means of a by-pass.

### SUMMARY OF THE INVENTION

The problems identified above have been solved according to the present invention by a method according to claim 1.

Bypass flow means a current of gases withdrawn from the line upstream of the said apparatus and re-inserted into said line downstream of said apparatus or discharged directly into the environment without passing through said apparatus.

Regulation may be performed by sending all the exhaust gases into the apparatus, or as bypass flow or dividing the exhaust gases in a variable manner between the apparatus and the bypass. In this case, the totality of the exhaust gases is that which must reach the exhaust gas discharge line downstream of the apparatus or be discharged into the environment and is therefore net, for example, of any recirculation flow (EGR) of exhaust gases to the engine, withdrawn upstream of the apparatus.

Said apparatus is a catalytic converterof the SCR type, which may be of known -type.

The invention also refers to an engine exhaust gas treatment system, including an exhaust gas discharge line, an exhaust gas treatment apparatus located on said line, a bypass duct connecting one point of said line upstream of said apparatus with one point of said line downstream of said apparatus or with the external environment and a device for regulation of the flow of gas in said bypass-duct, adapted to perform the method above described.

The contents of the attached claims is a particular object of the present invention

### LIST OF FIGURES

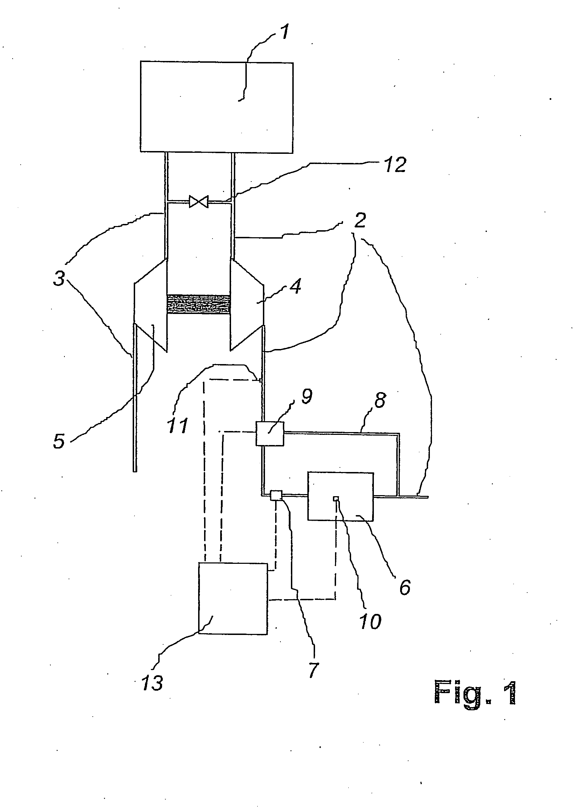

The present invention will now be illustrated with a detailed description of preferred but not exclusive embodiments given merely as an example with the aid of figure 1 attached which shows the scheme of an engine appliance equipped with the system according to one embodiment of the present invention.

### DETAILED DESCRIPTION OF AN EMBODIMENT

Figure 1 is a schematic representation of an engine appliance equipped with a system for treatment of the exhaust gases of an internal combustion engine 1 that may be preferably a diesel engine.

The system has a discharge line 2 which carries the exhaust gases away from the engine and towards the outside. An intake line 3 supplies air to the engine. The engine may be or may be not supercharged; figure 1 shows an engine that is supercharged thanks to a turbocompression unit including a turbine 4 located on the discharge line of the exhaust gases and operated by these, and a compressor 5, driven by said turbine, on the supply line.

An exhaust gas treatment apparatus 6 is present on the discharge line. According to the invention, it is an SCR catalytic converter, that may be of known type.

Means 7 for the injection of a reducing agent, for example a solution of urea, used in the reaction of the nitric oxides, may be present. A bypass duct 8 connects one point of the discharge line 2 upstream of the apparatus 6 with one point downstream, or directly with external environment.

A device 9 to regulate flow in the bypass duct 8 is present and, consequently also in the apparatus 6. Said device may include one or more valves, of known type, which may advantageously be a three-way valve. The device may be such as to direct the flow of gases alternatively either in the apparatus 6 or in the duct 8, or may distribute the flow of gases in different proportions between the two aforementioned elements, as required.

It is apparent that said flow is to be considered net of any flow of exhaust gases possibly recirculated to the engine and withdrawn upstream of the device 6, for example by means of a recirculation line 12. In the case of withdrawing downstream of the device, in the absence of other withdrawing points, said flow would obviously be equal to that leaving the engine 1.

The exhaust gases coming from the engine flow through the discharge line 2 through the device 6 or the bypass line.

According to the invention, a temperature is measured in the discharge line, upstream of the device 9, by means a specific sensor 11, and a temperature is measured inside the apparatus at at least one point considered appropriate, using a specific sensor 10.

The device 9 is regulated according to said temperature measured, preferably in such a way as to prevent excess cooling of the of the apparatus 6.

Regulation may, for example, be performed by a control unit 13 apt to process the data collected by the temperature sensors and to regulate the device 9. According to a possible embodiment, the apparatus 6 being an SCR converter, said unit also regulates the means for injection 7 according to the current of gases sent to the apparatus 6 and optionally according to the temperatures measured and/or other parameters usually taken into account in the regulation of SCR systems.

According to a first embodiment of the invention, the flow of gases is sent to the apparatus if the temperature measured in the exhaust gas discharge line is higher than a first preset value, and in the bypass duct, if the temperature is lower; or the flow of gases can be sent to the apparatus when above a preset value, to the bypass duct when below a third preset value lower than the second and distributed to both in variable proportions according to preset methods if the temperature is between the aforesaid second and third value. Temperature inside the apparatus being also measured, it is possible to take this into account in various ways, for example sending the flow of gases into the bypass, entirely or partially if the temperature in the discharge line and in the apparatus are both lower that a preset value which may be the same or different for the two points.

In any case, it is always possible to develop different methods of regulation according to the aforesaid temperature parameters and according to other measurable or forecast operating parameters.

The temperatures can be recorded at several points of the same line or inside the apparatus in order to take these into account during regulation, if considered appropriate.

The preset temperatures may be fixed or variable on the basis of other operating parameters according to preset methods that can be installed in the control unit optionally as computer programs.

The invention allows to avoid overcooling in an apparatus for the treatment of exhaust gases and is particularly suited in the case of SCR converters where the efficiency of the catalyst is poor at low temperatures. Furthermore, low temperatures of the exhaust gases usually correspond to partial load conditions characterized by limited production of nitric oxides and therefore with less pressing reduction requirements.

The presence of the bypass duct is also advantageous since it allows to protect the catalyst or any other component, when, in the case of malfunctions, the temperatures of the gases are too high, from irreversible damage, by discharging the overheated gases in emergency mode functioning.

The invention also refers to an engine appliance comprising a system as described above and a vehicle equipped with said system.

## Claims

1. Method for preventing excessive cooling of an SCR catalytic converter (6) located on the discharge line (2) of an internal combustion engine (1) and designed to convey at least part of the exhaust gases coming from said engine, **characterized by** the fact that it comprises measurement of the temperature inside said converter (6) and regulation of a bypass flow of gases of said apparatus by means of a regulation device (9) according to said temperature and to a temperature measured in said discharge line (2) at one point upstream of said regulation device (9).

2. Method according to claim 1, **characterized by** the fact that said exhaust gases are sent alternatively to said converter or to a bypass duct of said apparatus (8).

3. Method according to claim 2, **characterized by** the fact that said exhaust gases are sent to the converter if the temperature measured in the exhaust gas discharge line is higher than a first preset value, and in the bypass duct if the temperature is lower.

4. Method according to claim 1, **characterized by** the fact that said gases may be distributed at the same time partly between said converter and partly in a bypass duct of said apparatus.

5. System for the exhaust gas treatment of a engine (1), comprising a discharge line (2) of the exhaust gases, an SCR converter (6) located on said line, a bypass duct (8) connecting one point of said line upstream of said converter with one point of said line downstream of said converter or with the external environment and a regulation device (9) of the flow of gas in said bypass duct, **characterized by** the fact that it further comprises at least a temperature sensor (10) inside said converter, at least a temperature sensor (11) at one point upstream of said regulation device (9) and a control unit (13) able to regulate said device according to the temperatures detected by at least said sensor to avoid excessive cooling of the converter.

6. System according to claim from 5 , **characterized by** the fact that said device is a three-way valve.

7. Engine appliance, in particular diesel, including a system according to claim 5 or 6.

8. Vehicle equipped with an appliance according to claim 7.

## Patentansprüche

1. Verfahren, um das übermäßige Abkühlen eines SCR Katalysators (6) zu verhindern, der an der Druckleitung (2) eines Verbrennungsmotors (1) angeordnet ist und ausgestaltet ist, um wenigstens einen Teil der von dem Motor kommenden Abgase abzuleiten, **dadurch gekennzeichnet, dass** es die Temperaturmessung innerhalb des Katalysators (6) und die Regulierung eines Bypass-Flusses von Gasen der Maschine mittels einer Regulierungsvorrichtung (9) entsprechend der Temperatur und einer Temperatur, die in der Druckleitung (2) an einem Punkt stromaufwärts der Regulierungsvorrichtung (9) gemessen wird, umfasst.

2. Verfahren nach Anspruch 1, **dadurch gekennzeichnet, dass** die Abgase wechselweise zu dem Katalysator oder einer Bypassleitung der Maschine (8) geliefert werden.

3. Verfahren nach Anspruch 2, **dadurch gekennzeichnet, dass** die Abgase zu dem Katalysator geliefert werden, wenn die in der Abgas-Druckleitung gemessene Temperatur höher ist als ein erster, voreingestellter Wert, und in die Bypassleitung, wenn die Temperatur niedriger ist.

4. Verfahren nach Anspruch 1, **dadurch gekennzeichnet, dass** die Gase zum gleichen Zeitpunkt teilweise zwischen dem Katalysator und teilweise in eine Bypassleitung der Maschine verteilt werden können.

5. System zur Abgasbehandlung eines Motors (1), wobei es eine Druckleitung (2) der Abgase, einen SCR Katalysator (6), der an der Leitung angeordnet ist, eine Bypassleitung (8), die einen Punkt der Leitung stromaufwärts des Katalysators mit einem Punkt der Leitung stromabwärts des Katalysators oder mit der Außenumgebung verbindet, und eine Regulierungsvorrichtung (9) des Flusses des Gases in der Bypassleitung umfasst, **dadurch gekennzeichnet, dass** es ferner wenigstens einen Temperatursensor (10) innerhalb des Katalysators, wenigstens einen Temperatursensor (11) an einem Punkt stromaufwärts der Regulierungsvorrichtung (9) und eine Steuereinheit (13) umfasst, die geeignet ist, um die Vorrichtung entsprechend den Temperaturen zu regulieren, die durch wenigstens dem Sensor erfasst sind, um die übermäßige Abkühlung des Katalysators zu verhindern.

6. System nach Anspruch 5, **dadurch gekennzeichnet, dass** die Vorrichtung ein Drei-Wege-Ventil ist.

7. Motoreinrichtung, insbesondere Diesel, die ein System nach Anspruch 5 oder 6 enthält.

8. Fahrzeug, das mit einer Einrichtung nach Anspruch 7 ausgestattet ist.

## Revendications

1. Procédé pour éviter un refroidissement excessif d'un pot catalytique SCR (6) situé sur la conduite de refoulement (2) d'un moteur à combustion interne (1) et conçu pour transporter au moins une partie des gaz d'échappement provenant dudit moteur, **caractérisé par le fait qu'**il comprend la mesure de la température à l'intérieur dudit pot (6) et la régulation d'un écoulement de dérivation des gaz dudit appareil au moyen d'un dispositif de régulation (9) en fonction de ladite température et d'une température mesurée dans ladite conduite de refoulement (2) en un point en amont dudit dispositif de régulation (9).

2. Procédé selon la revendication 1, **caractérisé par le fait que** lesdits gaz d'échappement sont envoyés alternativement vers ledit pot ou vers un conduit de dérivation dudit appareil (8).

3. Procédé selon la revendication 2, **caractérisé par le fait que** lesdits gaz d'échappement sont envoyés vers le pot si la température mesurée dans la conduite de refoulement de gaz d'échappement est supérieure à une première valeur prédéterminée et dans le conduit de dérivation si la température est inférieure à cette valeur.

4. Procédé selon la revendication 1, **caractérisé par le fait que** lesdits gaz peuvent être répartis en même temps partiellement entre ledit pot et partiellement dans un conduit de dérivation dudit appareil.

5. Système pour le traitement des gaz d'échappement d'un moteur (1), comprenant une conduite de refoulement (2) des gaz d'échappement, un pot SCR (6) situé dans ladite conduite, un conduit de dérivation (8) reliant un point de ladite conduite en amont dudit pot à un point de ladite conduite en aval dudit pot ou à l'environnement externe et un dispositif de régulation (9) de l'écoulement de gaz dans ledit conduit de dérivation, **caractérisé par le fait qu'**il comprend en outre au moins un capteur de température (10) à l'intérieur dudit pot, au moins un capteur de température (11) en un point en amont dudit dispositif de régulation (9) et une unité de commande (13) capable de réguler ledit dispositif en fonction des températures détectées par lesdits au moins un capteurs pour éviter un refroidissement excessif du pot.

6. Système selon la revendication 5, **caractérisé par le fait que** ledit dispositif est une vanne à trois voies.

7. Appareil de moteur, en particulier diesel, comprenant un système selon la revendication 5 ou 6.

8. Véhicule équipé d'un appareil selon la revendication 7.
